# EUROPÄISCHE PATENTSCHRIFT

(11) **EP 0 548 098 B1**
(45) Veröffentlichungstag und Bekanntmachung des Hinweises auf die Patenterteilung: **20.07.1994**
(21) Anmeldenummer: 91914753.8
(22) Anmeldetag: 20.08.1991
(51) Int. Cl.: B26B 7/00, B25D 9/12, A22B 5/16

(54) **MESSER MIT RELATIV ZUM GRIFF IN SCHNELLER ABFOLGE BEWEGTER KLINGE**
KNIFE WITH BLADE QUICKLY MOVABLE IN RELATION TO THE HANDLE
COUTEAU A LAME SE DEPLACANT RAPIDEMENT PAR RAPPORT AU MANCHE

(30) Priorität: 08.09.1990 DE 4028579
(43) Veröffentlichungstag der Anmeldung: 30.06.1993
(73) Patentinhaber: Pi-Patente Gesellschaft mit beschränkter Haftung (GmbH) Entwicklung und Verwertung, 35435 Wettenberg (DE)
(72) Erfinder: MEIXNER, Hans-Werner, D-6301 Wettenberg (DE)
(74) Vertreter: Knefel, Siegfried, Dipl.-Math.
(86) Internationale Anmeldenummer: EP9101575
(87) Internationale Veröffentlichungsnummer: WO9204162

(56) Entgegenhaltungen:
- EP-A- 0 241 385
- DE-U- 8 908 775
- FR-A- 1 512 620
- FR-A- 2 410 540
- US-A- 3 995 369

## Beschreibung

Die Erfindung betrifft ein Messer zum Schneiden mit relativ zum Griff bewegter Klinge gemäß dem Oberbegriff des Anspruchs 1. Von einem Messer mit angetriebener Klinge wird verlangt, daß es den erforderlichen Kraftaufwand beim Schneiden eines Produktes gegenüber den Messern mit nicht angetriebener Klinge wesentlich verringert und damit auch den Zeitaufwand, zum Beispiel beim Entbeinen eines geschlachteten Tieres.

Bei einem zum Stand der Technik gehörenden Messer (DE-U-89 08 775) ist die angetriebene Klinge außerhalb des Messergriffes am Angriffskolben befestigt. Hierdurch ergibt sich eine unsichere Führung beim Gebrauch des Messers, weil beim Schneiden auf die Klinge ein Druck ausgeübt wird, der danach trachtet, die Klinge aus ihrer Bahn zu drücken. Die Zahl der mit einem solchen Messer durchführbaren Arbeiten ist damit beschränkt, denn mit einem solchen Messer ist lediglich ein gerader Schnitt möglich, jedoch kein krummliniges Schneiden, wie es zum Beispiel zum Entbeinen eines Schlachttieres notwendig ist. Um bei diesem Messer Gewicht einzusparen, ist darüber hinaus die Klinge dieses Messers sehr dünn ausgebildet, wodurch sich die schlechte Führungseigenschaft des Messers noch erhöht. Aus diesem Grunde ist eine Abstützung für die Klinge vorgesehen, welche ebenfalls außerhalb des Messers angeordnet ist und deshalb den Gebrauch des Messers erheblich stört, weil diese Abstützung beim Schneiden mit dem Fleisch in Berührung kommt und dieses zermalmt.

Es ist weiterhin ein Messer mit angetriebener Klinge gemäß CH-A-224 265 bekannt, bei dem die Klinge mit Hilfe eines Elektromagneten angetrieben wird. Die Führung der Klinge ist bei diesem Messer im Griff angeordnet, jedoch äußerst kurz gehalten, wodurch die Klinge keine sichere Lagerung hat, so daß dieselben Nachteile auftreten, wie bei dem eingangs erwähnten Messer, nämlich, daß es nicht sicher geführt werden kann. Außerdem muß bei dem Messer nach der CH-A-224 265 zum Auswechseln der Klinge der gesamte Antrieb aus dem Griff ausgebaut werden, was umständlich und zeitraubend ist, insbesondere, da beim handwerklichen Gebrauch des Messers, beispielsweise zum Entbeinen eines Schlachttieres, die Klingen häufig nachgeschliffen werden müssen, weil sie sich stark abnutzen und ausgewechselt werden müssen.

Der elektromagnetische Antrieb läßt es darüber hinaus nicht zu, daß die Klinge mit großer Kraft angetrieben wird, es sei denn, daß ein entsprechend großer Magnet gewählt wird. Ein derart großer Magnet gestaltet jedoch das Messer unhandlich vom Volumen her und wesentlich zu schwer im Gewicht.

Gemäß der EP-A-0 241 385 ist ein Messer mit meißelartig bewegter Klinge bekannt, das vorzugsweise zum öffnen von Muscheln dient. Bei diesem Messer soll die Klinge kräftige Stoßbewegungen in einer Richtung, nämlich vom Messergriff weg, ausführen. Die Stoßbewegungen werden durch einen durch Luftdruckschwankungen hin- und herbewegbaren Kolben bewirkt, der in der Arbeitsstellung der Klinge auf einen mit der Klinge fest verbundenen Amboß schlägt und diesen in Stoßrichtung vorwärtsbewegt.

Dieses Messer ist nicht zum Schneiden gedacht, zum Beispiel zum Entbeinen geschlachteter Tiere, weil bei ihm eine Druckbewegung in Achsrichtung der Klinge vorausgesetzt wird, bei Benutzung des Messers zum Schneiden aber die Belastung der Klinge quer zu dieser Bewegungsrichtung liegt. Messer zum Schneiden weisen üblicherweise eine im Griff des Messers angeordnete Angel auf.

Unter dem Begriff "Angel" wird in der Fachwelt und gemäß der Erfindung eine Verlängerung der Klinge, üblicherweise in Form der Klinge, verstanden, die in das Innere des Messergriffes reicht und hier als Befestigungsmittel dient. Im Sinne der Erfindung bewirkt die vorgesehene Angel eine stabile und sichere Hin- und Herbewegung der Klinge in der im Griff des Messers vorgesehenen besonderen Führung.

Ferner sind Maßnahmen zum Auswechseln der Klinge der EP-A-0 241 385 nicht zu entnehmen. Offensichtlich muß hierfür das gesamte Messer auseinandergenommen werden, so daß dieselben Nachteile auftreten wie bei dem Messer nach der CH-A-224 265.

Aufgabe der Erfindung ist es, ein Messer mit den Abmessungen/Volumen und dem annähernden Gewicht eines Messers mit feststehender Klinge anzugeben, das jedoch eine sich schnell, mit großer Kraft bewegende Klinge aufweist, ohne dabei zu stark zu vibrieren (vibrationsarm), bei dem die Klinge mit Angel bei sicherer, stabiler Führung mit den im Innern des Griffes vorgesehenen Antriebsmitteln leicht lösbar und leicht auswechselbar verbunden ist.

Ausgehend von einem Messer nach CH-A-224 265 wird diese Aufgabe durch ein Messer nach den Anspruch 1 gelöst.

Es wurde gefunden, daß durch die erfindungsgemäße Ausbildung der Schneidvorgang gefördert wird. Insbesondere ist nicht mehr die Kraftanstrengung erforderlich wie bisher, um das Messer durch das zu trennende Gut hindurchzuführen.

Der im Griff des Messers vorgesehene Antrieb der Klinge ist vorteilhaft ein hydraulischer Antrieb. Der Antrieb erfolgt am Ende der Angel. Die Abstützung der Angel kann dagegen im vorderen Teil des Griffes vorgesehen sein. Deshalb können die Angel und die Führung lang ausgebildet sein, so daß eine Verdrehung der Angel in der Führung und damit ein Auswandern der Klinge in seitlicher oder vertikaler Richtung unmöglich wird. Der zwischen diesen Angriffspunkten, der Kraftübertragung auf die Angel und der Abstützung der Angel, liegende Teil der Angel ist fast in seiner ganzen Länge in der Führung der Angel angeordnet.

Als Antriebsmedium kann ein lebensmittelverträgliches Öl dienen, um das Messer im Lebensmittelbereich einsetzen zu können.
Das Antriebsmedium Öl für die Hin- und Herbewegung der Messerklinge gewährleistet darüber hinaus, daß das Messer in ein Wasserbad gesteckt werden kann, ohne daß ein gefährlicher elektrischer Stromschlag zu befürchten ist.

Ein wesentlicher Vorteil der erfindungsgemäßen Ausbildung wird darin gesehen, daß das Messer griffig und gewichtsmäßig leicht ausgebildet werden kann und vibrationsarm ist, so daß auch bei längerem Gebrauch keine Ermüdungserscheinungen beim Benutzer auftreten. Derartige Erscheinungen sind üblich bei Handhabung von Messern mit nicht angetriebener Klinge, weil hier der Schneiddruck von Hand ausgeübt werden muß. Bei den Messern mit angetriebener Klinge nach dem Stand der Technik sind die Messer, durch den Antrieb bedingt, gewichtsmäßig schwer und vibrieren sehr stark. Es treten deshalb Ermüdungserscheinungen beim Benutzer auf. Aufgrund der beschränkten Leistung des Antriebes der Messer nach dem Stand der Technik können auch nur leichte Klingen verwendet werden, so daß ständig die Gefahr des Durchbiegens der Klinge beim Schneidvorgang besteht. Der erfindungsgemäße Antrieb gestattet es, da nur ein Teil des Gesamtantriebes im Griff untergebracht ist und der andere Teil außerhalb des Messers vorgesehen ist, ohne Beeinträchtigung der Leistung massive Klingen zu verwenden.

Weitere Einzelheiten der Erfindung können den Unteransprüchen entnommen werden.

In den Figuren sind Ausführungsbeispiele der Erfindung dargestellt, und zwar zeigen:
- Fig. 1: das Messer im Längsschnitt;
- Fig. 2: einen Schnitt nach der Linie II-II der Fig. 1;
- Fig. 3: einen Schnitt nach der Linie III-III der Fig. 1;
- Fig. 4a, 4b: die Ansicht des Messers teilweise aufgebrochen;

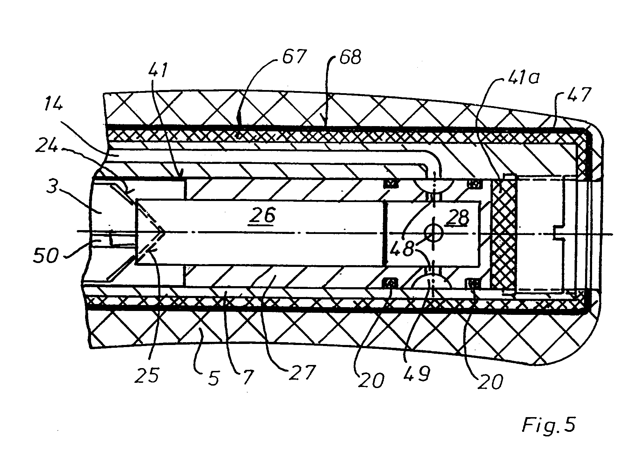

- Fig. 5: einen Schnitt durch den Messergriff am Ende.

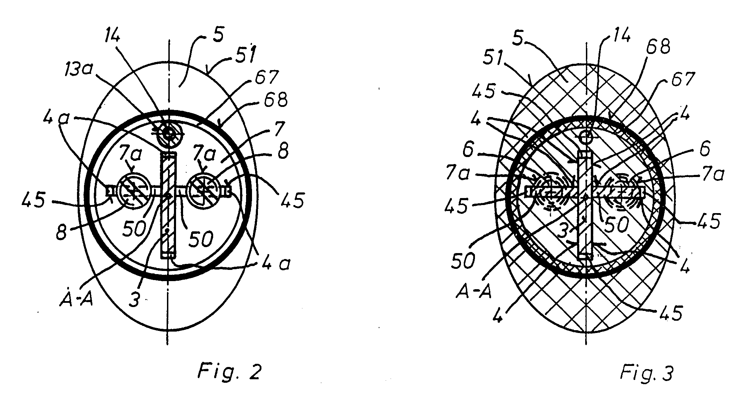

Das generell mit (1) bezeichnete Messer weist eine Klinge (2) auf, welche mit einer Angel (3) verbunden ist. Klinge (2) und Angel (3) bestehen beispielsweise vorteilhaft aus einem Stück, was aber nicht zwingend ist. Die Angel (3) hat gemäß Fig. 3 einen rechteckigen Querschnitt. In ihrem Endbereich trägt sie rechtwinklig angestellte Flügel (50). Angel (3) und Flügel (50) sind in einer Führung (4) axial verschiebbar gelagert. Die Führung (4) ist mit einem gleitfähigen Kunststoff ausgelegt. Einen solchen Kunststoffbelag können aber auch die Angel (3) und die Flügel (50) tragen. Auf die Flügel (50) der Angel (3) drücken Gegendruckfedern (6), welche beidseitig zur Angel (3) angeordnet sind. Die Gegendruckfedern (6) liegen im vorderen Teil des Griffes (5) und stützen sich in einer Ausnehmung (23) eines Gewindestückes (7) ab, bzw. an in die Ausnehmung (23) greifende Madenschrauben (8). Mit Hilfe der Madenschrauben (8) kann die Vorspannung der Gegendruckfedern (6) eingestellt werden. Die Madenschrauben (8) liegen in Gewindebohrungen (7a), welche zu beiden Seiten eines Schlitzes (45) für den Durchtritt der Angel (3) im Gewindestück (7) vorgesehen sind. Durch die Gewindebohrungen (7a) für die Madenschrauben (8) können bei der Montage die Gegendruckfedern (6) und auch die Flügel (50) der Angel (3) gesteckt werden. Die Gewindebohrungen (7a) greifen hierzu bis in den Schlitz (45), das heißt die Außenflächen des Schlitzes (45) bilden eine Sekante in der Gewindebohrung (7a), welche so lang ist, daß die Flügel (50) leicht hindurchgeschoben werden können. Die Gewindebohrungen (7a) selbst sind in ihren Durchmessern größer als der Durchmesser der Gegendruckfedern (6), um diese durch die Gewindebohrungen (7a) in den Griff (5) einführen zu können. Zur Montage wird die Angel (3) mit Flügeln (50) durch den Schlitz (45) und die Gewindebohrungen (7a) geschoben, anschließend werden die Gegendruckfedern (6) durch die Gewindebohrungen (7a) eingeführt und schließlich die Madenschrauben (8) eingeschraubt. Die Demontage erfolgt in umgekehrter Reihenfolge.
Die Gegendruckfedern (6) können Spiralfedern sein. Es können aber auch anstelle der Spiralfedern Tellerfedern vorgesehen sein, insbesondere Sätze von Tellerfedern.

Die Angel (3) und die Flügel (50) laufen am hinteren Ende (24) kegelförmig und zentrisch zur Angel (3) aus, das heißt mit einer Spitze in der Mittellinie (A-A) der Angel (3). Das Ende (24) stützt sich in einer Ausnehmung (25) des Kolbens (26) ab, welche mit etwas größerem Öffnungswinkel als die Spitze der Angel (3) ebenfalls kegelförmig ausgebildet ist. Die Gegendruckfedern (6) drücken damit über die Flügel (50) die Angel (3) stets zentriert gegen den Kolben (26).

Die Hin- und Herbewegung der Klinge (2) wird durch den Kolben (26) ausgelöst, welcher in einem Arbeitszylinder (27) läuft. Der Arbeitszylinder (27) ist mit einer Aufnahme (41) im Griff (5) des Messers gelagert. Die in axialer Richtung hinter dem Arbeitszylinder (27) liegende Halterung besteht aus einem Gummipuffer (41a), um die durch den hydraulischen Druck im Arbeitszylinder (27) und durch die Gegendruckfedern (6) ausgelösten Vibrationen aufzufangen. Im Arbeitsraum (28) des Arbeitszylinders (27) ist ein Öl angeordnet, auf das zum Zwecke der Vorwärtsbewegung des Kolbens (26) ein Überdruck ausgeübt wird, oder zum Zwecke der Rückwärtsbewegung ein Unterdruck, dessen negatives Kraftmoment von den Gegendruckfedern (6) unterstützt wird.

Die Führung (4), der Arbeitszylinder (27) sowie der Raum für die Gegendruckfedern (6) sind von einer schichtweise aufgebauten Ummantelung (67) umgeben, wobei die innere Schicht (67) beispielsweise aus Weichgummi besteht und die äußere Schicht aus einer lebensmittelechten relativ harten Kunststoffhaut (68). Diese Ausbildung bewirkt eine weitere Dämpfung der Vibrationen sowie eine Geräuschdämpfung.

Der Arbeitsraum (28) des Arbeitszylinders ist durch einen im Griff (5) vorgesehenen Kanal (14) mit einem Anschluß (13a) für eine Öldruckleitung (29) verbunden. Der Anschluß (13a) liegt vorn im Griff (5) des Messers , und zwar oberhalb des Rückens (9) der Klinge (2), zum Beispiel stirnseitig, um ein Umgreifen des Messers (1) über das Griffende zu ermöglichen. Die Öldruckleitung (29) ist zu einer Antriebseinrichtung geführt (nicht dargestellt). Der Kanal (14) mündet im hinteren Teil (47) des Griffes (5) in eine ringförmige Vertiefung (49) des Zylinders (27), welche über einen Kanal (48) mit dem Arbeitsraum (28) des Arbeitszylinders (27) verbunden ist. Diese Ausbildung ermöglicht, daß der Arbeitszylinder (27), um seine Achse verdreht, in beliebiger Stellung in dem Griff (5) angeordnet werden kann. Die ringförmige Vertiefung (49) ist durch beidseitig der Vertiefung (49) angeordnete Dichtungsringe (20) (O-Ringe) gegen den Spalt zwischen Arbeitszylinder (27) und Aufnahme (41) abgedichtet. Diese Ausbildung gewährleistet, daß kein Öl in diesen Spalt dringt, auch dann nicht, wenn der Arbeitszylinder in axialer Richtung leichte Vibrationsbewegungen durchführt.

Da die Klinge (2) des Messers (1) sehr häufig nachgeschliffen werden muß und demzufolge nach einer gewissen Zeit unbrauchbar wird, ist in der Öldruckleitung (29) zwischen dem im Messergriff vorgesehenen Antrieb und dem eigentlichen, getrennt vom Messer vorgesehenen Antrieb eine Schnellkupplung (15) vorgesehen, um das Messer (1) von der getrennt vorgesehenen Antriebseinrichtung (nicht dargestellt) für den Kolben (26) des Arbeitszylinders leicht lösen zu können. Denn zum Schleifen werden aus Sicherheitsgründen die Klingen (2) nicht aus dem Messer (1) herausgenommen, so daß das Messer mit seinem Antrieb von der eigentlichen Antriebseinrichtung gelöst werden muß.

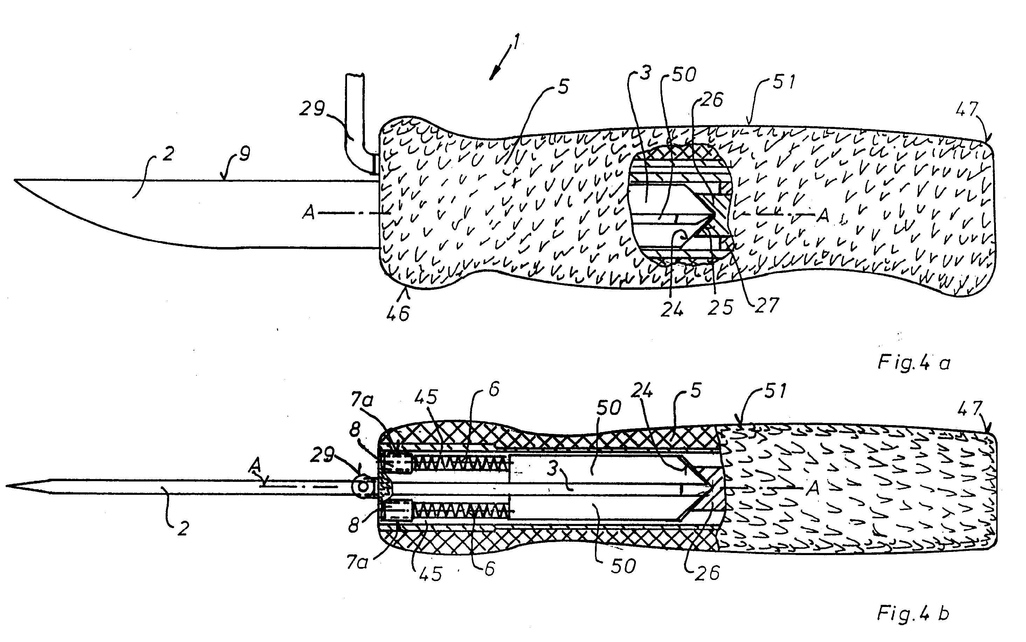

Wie aus den Fig. 4a und 4b zu erkennen ist, entspricht der hintere Teil (47) des Messergriffes (5) in seiner Länge und Ausbildung einem üblichen Messergriff. Die Griffschale (51) zeigt jedoch zur Klinge hin eine Erweiterung (46). Diese dient als Daumenauflage bei Benutzung des Messers und verhindert gleichzeitig ein Verrutschen der Hand oder eines Fingers über den Griffanfang hinaus bis in den Bereich der sich bewegenden Klinge. Hierdurch wird die Sicherheit bei der Messerbenutzung erhöht. Die Erweiterung der Griffschale (51) ist nicht zwingend. Es können hierfür auch andere Ausbildungen vorgesehen sein.
Der hintere Teil (47) des Messergriffes (5) entspricht in seiner Länge und Ausbildung einem üblichen Messergriff für ein Messer mit nicht bewegter Klinge. Die Erweiterung verlängert die übliche Griffausbildung geringfügig. Die Verlängerung wirkt sich vorteilhaft auf die Verlängerung der Angel (3) in der Führung (4) aus.

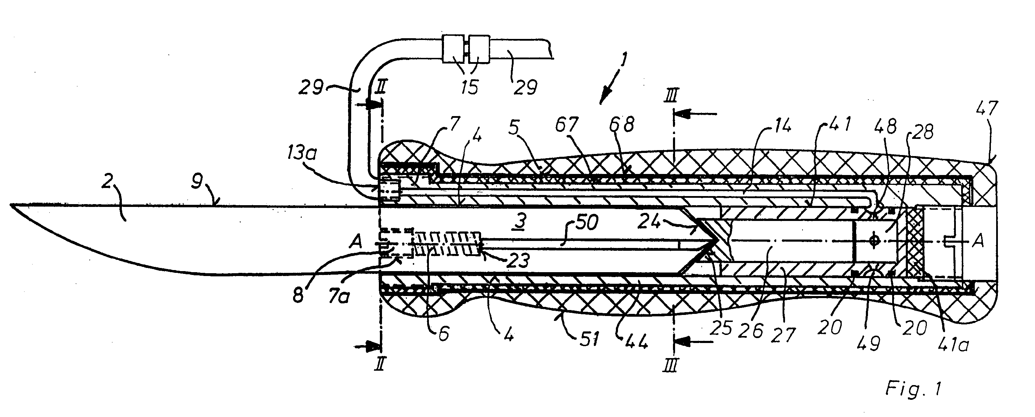

Wie aus der Fig. 1 hervorgeht, stützt sich die Angel (3) in der Ausnehmung (25) des Kolbens (26) zentrisch, das heißt längs der Mittellinie (A-A) ab. Die beidseitig zur Mittellinie (A-A) der Angel (3) liegenden Teile, nämlich die Flügel (50), sind, wie in Fig. 3 gezeigt, asymmetrisch zur Mittellinie (A-A) angeordnet. Eine entsprechende Ausbildung zeigt die Führung (4) für diese Teile. Durch diese Maßnahme wird erreicht, daß die Klinge (2) mit der Angel (3) nur in einer ganz bestimmten Stellung in den Griff (5) des Messers (1) eingeschoben werden kann, wodurch die Betriebssicherheit erhöht wird. Die Führung (4) nimmt die kreuzförmige Ausbildung der Angel (3) paßgenau auf. Ein Verkanten der Klinge (2) in der Zeichenebene oder senkrecht hierzu ist wegen der kreuzförmigen Ausbildung von Führung und Angel nicht möglich.
Die kreuzförmige Ausbildung (3, 50) der Angel (3) ist nur im hinteren Teil der Angel (3) vorgesehen.

Der Messergriff (5) und seine einzelnen Teile für den Antrieb des Messers und auch das Messer mit Angel selbst weisen eine Eigenfrequenz auf, welche außerhalb, vorteilhaft weit oberhalb, der Antriebsfrequenz für den Kolben liegt, und zwar für den gesamten Antriebsbereich. Hierdurch werden Resonanzerscheinungen vermieden.

Da die Konstruktion auch Vibrationen in hohem Maße dämpft, liegt das Messer bei Benutzung sehr ruhig in der Hand.

### Bezugszeichen

- 1: Messer
- 2: Klinge
- 3: Angel
- 3, 50: asymmetrisches Kreuz
- 4: Führung
- 4a: kreuzförmige Öffnung
- 5: Griff
- 6: Gegendruckfeder
- 7: Gewindestück
- 7a: Gewindebohrungen für die Madenschrauben
- 8: Madenschraube
- 9: Rücken der Klinge 2

- 10: Zylinder
- 11: automatische Ölnachfülleinrichtung
- 12: Entlüftungseinrichtung
- 13: Anschluß für die Ölleitung
- 13a: Anschluß für die Ölleitung
- 14: Kanal
- 15: Schnellkupplung

- 20: Dichtungsring
- 23: Ausnehmung
- 24: spitzwinkliges Ende der Angel (3)
- 25: kegelförmige Ausnehmung
- 26: Kolben
- 27: Arbeitszylinder
- 28: Arbeitsraum
- 29: Öldruckleitung

- 41: Aufnahme für Zylinder
- 41a: Gummipuffer
- 44: Aufnahme für Führung
- 45: Schlitz
- 46: Erweiterung des Griffes
- 47: hinterer Teil des Griffes
- 48: Kanal
- 49: ringförmige Vertiefung

- 7, 23: Aufnahme für Feder

- 50: Flügel der Angel
- 51: Griffschale

- 67: innere Schicht (Gummi)
- 68: äußere Schicht (Kunststoff)
- 67, 68: Ummantelung

- A-A: Achse

## Patentansprüche

1. Messer zum Schneiden mit relativ zum Griff in schneller Abfolge bewegter Klinge, bei dem die Klinge (2) eine Angel (3) aufweist, die in einer Führung (4) des Griffes (5) durch einen Messerantrieb und wenigstens eine Gegendruckfeder (6) in axialer Richtung hin- und herbewegbar ist, **dadurch gekennzeichnet**, daß die Angel (3) sich mit ihrem hinteren Teil auf einem mit Hilfe eines Druckmittels angetriebenem Kolben (26) des Messerantriebs abstützt, daß die Angel (3) Flügel (50) oder Stehbolzen trägt, und daß sich die wenigstens eine Gegendruckfeder (6) mit einem Ende auf einem Ende wenigstens eines Flügels (50) oder eines Stehbolzens der Angel (3) abstützt und mit dem anderen Ende an einem am Messerseitigen Ende des Griffes (5) angeordneten Gewindestück (7).

2. Messer nach Ansruch 1, dadurch gekennzeichnet, daß die Flügel (50) oder Stehbolzen senkrecht zur Fläche der Angel angeordnet sind.

3. Messer nach Anspruch 1 oder 2, dadurch gekennzeichnet, daß die Führung (4) für die Angel (3) länger ist als die Flügel (50) der Angel (3).

4. Messer nach einem der Ansprüche 1 bis 3, dadurch gekennzeichnet, daß die Angel (3) und gegebenenfalls die Flügel (50) oder die Stehbolzen an ihrem hinteren Ende (24) kegelartig, zentrisch zur Achse A-A der Angel (3), spitz zuläuft und der Kolben (26) stirnseitig eine kegelförmige Ausnehmung (25) für die Aufnahme des kegelförmigen Endes der Angel (3) aufweist.

5. Messer nach einem der Ansprüche 1 bis 4, dadurch gekennzeichnet, daß zwei Gegendruckfedern (6) vorgesehen sind, von denen eine auf der einen Seite der Angel (3) angeordnet ist und die andere auf der anderen Seite der Angel (3).

6. Messer nach einem der Ansprüche 1 bis 5, dadurch gekennzeichnet, daß sowohl die Führung (4) als auch die in ihr gleitende Angel (3) mit Flügeln (50) oder Stehbolzen im Querschnitt ein asymmetrisches Kreuz (3, 50) bilden.

7. Messer nach einem der Ansprüche 1 bis 6, dadurch gekennzeichnet, daß die Führung (4) für die Angel (3) oder die Angel (3) einschließlich der Flügel (50) oder Stehbolzen mit einem gleitfähigen Kunststoffmaterial ausgelegt ist und/oder die Angel (3) und die Flügel (50) oder die Stehbolzen selbst mit einem gleitfähigen Kunststoffmaterial versehen sind.

8. Messer nach Anspruch 7, dadurch gekennzeichnet, daß das Kunststoffmaterial Teflon (Handelsname) ist.

9. Messer nach einem der Ansprüche 1 bis 8, dadurch gekennzeichnet, daß die Führung (4) die Angel (3) gegebenenfalls mit Flügeln (50) oder Stehbolzen im Querschnitt paßgenau einbettet.

10. Messer nach einem der Ansprüche 1 bis 9, dadurch gekennzeichnet, daß für die wenigstens eine Gegendruckfeder (6) Abstützungen vorgesehen sind, deren Abstand voneinander etwa der Länge dieser Feder im Ausgangszustand entspricht.

11. Messer nach einem der Ansprüche 1 bis 10, dadurch gekennzeichnet, daß das Gewindestück (7) wenigstens eine Gewindebohrung (7a) für wenigstens eine Madenschraube (8) für die Abstützung des Endes der wenigstens einen Gegendruckfeder (6) aufweist.

12. Messer nach Anspruch 11, dadurch gekennzeichnet, daß der Durchmesser jeder Gewindebohrung (7a) größer ist als der Durchmesser der zugeordneten Gegendruckfeder (6).

13. Messer nach einem der Ansprüche 1 bis 12, dadurch gekennzeichnet, daß beidseitig zur Angel (3) je eine Gewindebohrung (7a) für eine Madenschraube (8) vorgesehen ist.

14. Messer nach einem der Ansprüche 1 bis 13, dadurch gekennzeichnet, daß die Gegendruckfeder (6) als Spiralfeder ausgebildet ist.

15. Messer nach einem der Ansprüche 1 bis 13, dadurch gekennzeichnet, daß die Gegendruckfeder (6) als Tellerfeder oder Tellerfedersatz ausgebildet ist.

16. Messer nach einem der Ansprüche 1 bis 15, dadurch gekennzeichnet, daß das Gewindestück (7) einen Schlitz (45) aufweist, und daß der Schlitz (45) mit den Gewindebohrungen (7a) eine im wesentlichen kreuzförmige Öffnung für den Durchtritt der Angel (3) mit Flügeln (50) oder Stehbolzen bildet.

17. Messer nach einem der Ansprüche 1 bis 16, dadurch gekennzeichnet, daß zwischen Klinge (2) und Angel (3) oder Angel (3) und Kolben (26) eine leicht lösbare Verbindung vorgesehen ist.

18. Messer nach einem der Ansprüche 1 bis 17, dadurch gekennzeichnet, daß der Griff (5) eine Aufnahme (41) für einen den Kolben (26) aufnehmenden Arbeitszylinder (27) aufweist sowie eine Aufnahme (44) für die Führung (4) der Angel (3) sowie das Gewindestück (7) für die Gegendruckfeder (6) und deren Madenschraube (8), und daß die Aufnahmen (41, 44, 7) fest miteinander verbunden sind.

19. Messer nach Anspruch 18, dadurch gekennzeichnet, daß der Arbeitszylinder (27) in axialer Richtung nachgiebig in seiner Aufnahme (41) gelagert ist.

20. Messer nach Anspruch 19, dadurch gekennzeichnet, daß der Arbeitszylinder (27) sich in axialer Richtung auf einem elastischen Element (Gummipuffer (41a)) abstützt.

21. Messer nach einem der Ansprüche 1 bis 20, dadurch gekennzeichnet, daß die Betätigungselemente (3, 4, 6, 24, 25, 26, 27) in eine gummiartige Ummantelung (67) eingebettet sind.

22. Messer nach Anspruch 21, dadurch gekennzeichnet, daß die gummiartige Ummantelung (6) von einer mit der Ummantelung (67) verbundenen Kunststoffhaut (68) umgeben ist.

23. Messer nach Anspruch 22, dadurch gekennzeichnet, daß die Kunststoffhaut (68) lebensmittelecht ist.

24. Messer nach Anspruch 21 oder 22, dadurch gekennzeichnet, daß die Griffschale (51) des Messers, die Ummantelung (67) und/oder die Kunststoffhaut (68) die Betätigungselemente (3, 4, 6, 24, 25, 26, 27) wasserdicht umschließt.

25. Messer nach einem der Ansprüche 1 bis 24, dadurch gekennzeichnet, daß die Klinge hydraulisch angetrieben ist, und daß im Griff (5) ein den hinteren Teil des Arbeitszylinders (27) mit dem vorderen Teil des Messergriffes (5) verbindender Kanal (14) vorgesehen ist, der oberhalb des Rückens der Klinge (2) aus dem Griff (5) austritt.

26. Messer nach Anspruch 25, dadurch gekennzeichnet, daß der Griff (5) an der Austrittsstelle einen Anschluß (13) für die Öldruckleitung (29) trägt.

27. Messer nach Anspruch 25, dadurch gekennzeichnet, daß der Kanal (14) stirnseitig aus dem Griff (5) austritt.

28. Messer nach Anspruch 27, dadurch gekennzeichnet, daß der Arbeitszylinder (27) an seinem hinteren Ende eine äußere ringförmige Vertiefung (49) aufweist, welche über wenigstens einen Kanal (48) mit dem Innenraum des Arbeitszylinders (27) verbunden ist, und daß der Kanal (14) in die ringförmige Vertiefung (49) mündet.

29. Messer nach Anspruch 28, dadurch gekennzeichnet, daß die ringförmige Vertiefung (49) beidseitig durch Dichtungsringe (20) (O-Ringe) gegen den Spalt zwischen Arbeitszylinder (27) und Aufnahme (41) abgeschlossen ist.

30. Messer nach Anspruch 1, dadurch gekennzeichnet, daß die wenigstens eine Gegendruckfeder (6) aus einer zweiten Druckeinrichtung besteht, die gegenläufig zum Arbeitszylinder (27) arbeitet.

31. Messer nach Anspruch 1, dadurch gekennzeichnet, daß die Eigenfrequenz des Messers und seiner Einzelteile (2, 3, 4, 5, 6, 26, 27) wesentlich oberhalb des Bereiches der Antriebsfrequenzen des Kolbens (26) liegt.

32. Messer nach Anspruch 1, dadurch gekennzeichnet, daß der Griff (5) in seiner Größe und äußeren Form annähernd dem Griff eines üblichen Fleischermessers mit fester Klinge entspricht.

33. Messer nach Anspruch 32, dadurch gekennzeichnet, daß die Griffschale (51) zur Klinge hin eine als Fingerund Handschutz dienende Erweiterung (46) trägt.

34. Messer nach Anspruch 33, dadurch gekennzeichnet, daß der Griff (5) zur Klinge hin verlängert ist und die Verlängerung als Erweiterung (46) ausgebildet ist.

35. Messer nach Anspruch 1, dadurch gekennzeichnet, daß am Griff (5) ein Elektroschalter vorgesehen ist, welcher auf eine getrennt vorgesehene Antriebseinrichtung für den Kolben (26) im Messergriff (5) wirkt.

## Claims

1. Knife for cutting with blade quickly movable in relation to the handle, wherein the blade (2) has a tang (3) which can be moved to and fro in axial direction in a guide (4) of the handle (5) by a knife drive and at least one counterpressure spring (6),
**characterized in that** the tang (3) is supported with its rear part on a piston (26) driven by means of a pressure medium, that the tang (3) has wings (50) or stay bolts, and that at least one counterpressure spring (6) is supported with one end on one end of at least one wing (50) or of one stay bolt of the tang (3) and with the other end at a threaded fitting (7) positioned at the blade end of the handle (5).

2. Knife according to claim 1, characterized in that the wings (50) or stay bolts are positioned perpendicular to the surface of the tang.

3. Knife according to claim 1 or claim 2, characterized in that the guide (4) for the tang (3) is longer than the wings (50) of the tang (3).

4. Knife according to one of claims 1 through 3, characterized in that the tang (3), and where applicable the wings (50) or the stay bolts, tapers at its rear end (24) centrically to the axis A-A of the tang (3) and the piston (26) has on its end face a tapered recess (25) to hold the tapered end of the tang (3).

5. Knife according to one of claims 1 through 4, characterized in that two counterpressure springs (6) are provided, one of then positioned on one side of the tang (3) and the other on the other side of the tang (3).

6. Knife according to one of claims 1 through 5, characterized in that both the guide (4) and the tang (3) with wings (50) or stay bolts sliding in it form an asymmetric cross (3, 50) in the cross-section.

7. Knife according to one of claims 1 through 6, characterized in that the guide (4) for the tang (3) or the tang (3) including the wings (50) or stay bolts is lined with a blocking-resistant plastic material and/or the tang (3) and the wings (50) or the stay bolts themselves are provided with a blocking-resistant plastic material.

8. Knife according to claim 7, characterized in that the plastic material is Teflon (trade name).

9. Knife according to one of claims 1 through 8, characterized in that the guide (4) embeds the tang (3), if applicable with wings (50) or stay bolts, with an exact fit in the cross-section.

10. Knife according to one of claims 1 through 9, characterized in that supports are provided for the at least one counterpressure spring (6), whose distance from one another corresponds approximately to the length of that spring in initial state.

11. Knife according to one of claims 1 through 10, characterized in that the threaded fitting (7) has at least one threaded hole (7a) for at least one grub screw (8) for the support of the end of the at least one counterpressure spring (6).

12. Knife according to claim 11, characterized in that the diameter of each threaded hole (7a) is greater than the diameter of the assigned counterpressure spring (6).

13. Knife according to one of claims 1 through 12, characterized in that a threaded hole (7a) for a grub screw (8) is provided on either side of the tang (3) respectively.

14. Knife according to one of claims 1 through 13, characterized in that the counterpressure spring (6) is designed as a helical spring.

15. Knife according to one of claims 1 through 13, characterized in that the counterpressure spring (6) is designed as a cup spring or cup spring assembly.

16. Knife according to one of claims 1 through 15, characterized in that the threaded fitting (7) has a slot (45) and that the slot (45) forms with the threaded holes (7a) an essentially cruciform opening for emergence of the tang (3) with wings (50) or stay bolts.

17. Knife according to one of claims 1 through 16, characterized in that an easily detachable connection is provided between blade (2) and tang (3) or tang (3) and piston (26).

18. Knife according to one of claims 1 through 17, characterized in that the handle (5) has a mount (41) for a working cylinder (27) holding the piston (26) and a mount (44) for the guide (4) of the tang (3) and the threaded fitting (7) for the counterpressure spring (6) and its grub screw (8), and that the mounts (41, 44, 7) are rigidly connected with one another.

19. Knife according to claim 18, characterized in that the working cylinder (27) is held non-rigidly in its mount (41) in axial direction.

20. Knife according to claim 19, characterized in that the working cylinder (27) is supported in axial direction on a flexible element (rubber buffer (41a)).

21. Knife according to one of claims 1 through 20, characterized in that the operating elements (3, 4, 6, 24, 25, 26, 27) are embedded in a rubbery casing (67).

22. Knife according to claim 21, characterized in that the rubbery casing (67) is enclosed in a plastic skin (68) connected with the casing (67).

23. Knife according to claim 22, characterized in that the plastic skin (68) is food-compatible.

24. Knife according to claim 21 or claim 22, characterized in that the shell (51) of the handle of the knife, the casing (67) and/or the plastic skin (68) waterproofs the operating elements (3, 4, 6, 24, 25, 26,27).

25. Knife according to one of claims 1 through 24, characterized in that the blade is hydraulically driven and that in the handle (5) a channel (14) connecting the rear part of the working cylinder (27) with the front part of the knife handle (5) is provided, which emerges from the handle (5) above the back of the blade (2).

26. Knife according to claim 25, characterized in that the handle (5) bears at the point of emergence a connection (13) for the oil pressure line (29).

27. Knife according to claim 25, characterized in that the channel (14) emerges from the handle (5) on the face side.

28. Knife according to claim 27, characterized in that the working cylinder (27) has at its rear end an external annular depression (49) which is connected via at least one channel (48) with the internal compartment of the working cylinder (27) and that the channel (14) opens into the annular depression (49).

29. Knife according to claim 28, characterized in that the annular depression (49) is sealed off on either side by sealing rings (20) (O-rings) against the gap between working cylinder (27) and mount (41).

30. Knife according to claim 1, characterized in that the at least one counterpressure spring (6) consists of a second pressure device which operates in opposite direction to the working cylinder (27).

31. Knife according to claim 1, characterized in that the natural frequency of the knife and of its individual parts (2, 3, 4, 5, 6, 26, 27) is substantially above the range of the drive frequency of the piston (26).

32. Knife according to claim 1, characterized in that the handle (5) complies in its size and external form approximately with the handle of a conventional butcher's knife with a rigid blade.

33. Knife according to claim 32, characterized in that the shell (51) of the handle has towards the blade a widening (46) serving as a finger and hand protection.

34. Knife according to claim 33, characterized in that the handle (5) is extended towards the blade and the extension is designed as a widening (46).

35. Knife according to claim 1, characterized in that an electric switch is provided on the handle (5), which acts on a separately provided driving device for the piston (26) in the knife handle (5).

## Revendications

1. Couteau à découper, comprenant une lame animée de mouvements en succession rapide par rapport au manche, dans lequel la lame (2) possède une soie (3) qui se déplace en mouvement alternatif dans la direction axiale dans un guidage (4) du manche (5),
caractérisé en ce que la soie (3) prend appui par sa partie arrière sur un piston (26) entraîné à l'aide d'un milieu de pression, en ce que la soie (3) porte des ailettes (50) ou des tenons, et en ce que le au moins un ressort de contre-pression (6) prend appui par une extrémité, sur une extrémité d'au moins une ailette (50) ou d'un tenon de la soie (3) et, par l'autre extrémité, sur un élément fileté (7) disposé à l'extrémité côté lame du manche (5).

2. Couteau selon la revendication 1, caractérisé en ce que les ailettes ou tenons sont disposés perpendiculairement à la surface de la soie.

3. Couteau selon la revendication 1 ou 2, caractérisé en ce que le guidage (4) prévu pour la soie (3) est plus long que les ailettes (50) de la soie (3).

4. Couteau selon une des revendications 1 à 3, caractérisé en ce que la soie (3) et éventuellement les ailettes (50) ou les tenons se terminent à leur extrémité arrière (24) en pointe, avec une forme conique et dans une disposition centrée par rapport à l'axe (A-A) de la soie (3), et le piston (26) présente en position frontale un évidement conique (25) destiné à recevoir l'extrémité conique de la soie (3).

5. Couteau selon une des revendications 1 à 4, caractérisé en ce qu'il est prévu deux ressorts de contre-pression (6) dont l'un est disposé d'un côté de la soie (3) et l'autre de l'autre côté de la soie (3).

6. Couteau selon une des revendications 1 à 5, caractérisé en ce que le guidage (4) et la soie (3) qui coulisse dans ce guidage, avec ses ailettes (50) ou ses tenons, forment en section transversale une croix asymétrique (3, 50).

7. Couteau selon une des revendications 1 à 6, caractérisé en ce que le guidage (4) prévu pour la soie (3), ou la soie (3) y compris les ailettes (50) ou tenons, est revêtu d'une matière plastique glissante et/ou la soie (3) et les ailettes (50) ou les tenons sont eux-mêmes munis d'une matière plastique glissante.

8. Couteau selon la revendication 7, caractérisé en ce que la matière plastique est le Téflon (non commercial).

9. Couteau selon une des revendications 1 à 8, caractérisé en ce que le guidage (4) emboîte la soie (3), éventuellement avec ses ailettes (50) ou tenons, avec précision en section transversale.

10. Couteau selon une des revendication 1 à 9, caractérisé en ce qu'il est prévu, pour le au moins un ressort de contre-pression (6), des appuis dont l'écartement mutuel correspond à peu près à la longueur de ces ressorts dans l'état de départ.

11. Couteau selon une des revendications 1 à 10, caractérisé en ce que l'élément fileté (7) présente au moins un perçage fileté (7a) destiné à recevoir au moins une vis sans tête (8) pour donner appui à l'extrémité du au moins un ressort de contre-pression (6).

12. Couteau selon la revendication 11, caractérisé en ce que le diamètre de chaque perçage fileté (7a) est plus grand que le diamètre du ressort de contre-pression (6) qu'il lui est associé.

13. Couteau selon une des revendications 1 à 12, caractérisé en ce qu'il est prévu de chaque côté de la soie (3) un perçage fileté (7a) destiné à recevoir une vis sans tête (8).

14. Couteau selon une des revendications 1 à 13, caractérisé en ce que le ressort de contre-pression (6) est constitué par un ressort hélicoïdal.

15. Couteau selon une des revendication 1 à 13, caractérisé en ce que le ressort de compression (6) est constitué par une rondelle Belleville ou un jeu de rondelles Belleville.

16. Couteau selon une des revendications 1 à 4, caractérisé en ce que l'élément fileté (7) présente une fente (45) et en ce que la fente (45) forme avec les perçages filetés (7a) une ouverture sensiblement en forme de croix pour donner passage à la soie (3) munie de ses ailettes (50) ou tenons.

17. Couteau selon une des revendications 1 à 16, caractérisé en ce qu'il est prévu une liaison facilement démontable entre la lame (2) et sa soie (3), ou entre la soie (3) et le piston (26).

18. Couteau selon une des revendications 1 à 17, caractérisé en ce que le manche (5) présente une portée (41) pour un cylindre de travail (27) qui reçoit le piston (26), ainsi qu'une portée (44) pour le guidage (4) de la soie (3), ainsi que pour l'élément fileté (7) recevant les ressorts de contre-pression (6) et leurs vis sans tête (8), et en ce que les portées (41, 44, 7) sont reliées solidairement entre elles.

19. Couteau selon la revendication 18, caractérisé en ce que le cylindre de travail (27) est monté dans sa portée (41) avec possibilité de céder dans la direction axiale.

20. Couteau selon la revendication 19, caractérisé en ce que le cylindre de travail (27) prend appui dans la direction axiale sur un élément élastique (tampon de caoutchouc (41a)).

21. Couteau selon une des revendications 1 à 20, caractérisé en ce que les éléments d'actionnement (3, 4, 6, 24, 25, 26, 27) sont enfermés dans une enveloppe (67) du type du caoutchouc.

22. Couteau selon la revendication 21, caractérisé en ce que l'enveloppe (6) du type de caoutchouc est entourée d'une peau en matière plastique (68) reliée à l'enveloppe (67).

23. Couteau selon la revendication 22, caractérisé en ce que la peau de matière plastique (68) est de la qualité alimentaire.

24. Couteau selon la revendication 21 ou 22, caractérisé en ce que la coquille (51) du manche du couteau, l'enveloppe (67) et/ou la peau en matière plastique (68) enferment les éléments d'actionnement (3, 4, 6, 24, 25, 26, 27) à joint étanche à l'eau.

25. Couteau selon une des revendications 1 à 24, caractérisé en ce que la lame est entraînée hydrauliquement et en ce que, dans le manche (5), est prévu un canal (14) qui relie la partie arrière du cylindre de travail (27) à la partie avant du manche (5) du couteau et qui sort du manche (5) au-dessus du dos de la lame (2).

26. Couteau selon la revendication 25, caractérisé en ce que, dans la zone de sortie, le manche (5) porte un raccord (13) pour la conduite de pression d'huile (29).

27. Couteau selon la revendication 25, caractérisé en ce que le canal (14) sort du manche (5) au droit de la face frontale.

28. Couteau selon la revendication 27, caractérisé en ce que le cylindre de travail (27) présente à son extrémité arrière un évidement annulaire extérieur (49) qui est relié par au moins un canal (48) à la chambre intérieure du cylindre de travail (27) et en ce que le canal (14) débouche dans l'évidement annulaire (49).

29. Couteau selon la revendication 28, caractérisé en ce que, des deux côtés, l'évidement annulaire (49) est isolé de la fente entre le cylindre de travail (27) et la portée (41) par des bagues d'étanchéité (20) (bagues toriques).

30. Couteau selon la revendication 1, caractérisé en ce que le au moins un ressort de contre-pression (6) est constitué par un deuxième dispositif de pression qui travaille en sens inverse du cylindre de travail (27).

31. Couteau selon la revendication 1, caractérisé en ce que la fréquence propre du couteau et de ses éléments (2, 3, 4, 5, 6, 26, 27) est sensiblement au-dessus de l'intervalle des fréquences d'entraînement du piston (26).

32. Couteau selon la revendication 1, caractérisé en ce que le manche (5) correspond à peu près en grandeur et forme extérieure au manche d'un couteau à viande habituel à lame fixe.

33. Couteau selon la revendication 32, caractérisé en ce que la coquille (51) du manche présente en direction de la lame un renflement (46) qui sert de protection pour les doigts et la main.

34. Couteau selon la revendication 33, caractérisé en ce que le manche (5) est prolongé en direction de la lame et que le prolongement forme un renflement (46).

35. Couteau selon la revendication 1, caractérisé en ce que, sur le manche (5), est prévu un commutateur électrique qui agit sur un dispositif moteur, prévu séparément, qui attaque le piston (26) placé dans le manche (5) du couteau.
